# FASCICULE DE BREVET EUROPEEN

(11) **EP 3 105 035 B1**
(45) Date de publication et mention de la délivrance du brevet: **04.04.2018**
(21) Numéro de dépôt: 15703558.5
(22) Date de dépôt: 04.02.2015
(51) Int. Cl.: B29C 49/64, B29C 49/68, B29C 49/06, B29C 49/12, B29K 667/00, B29L 31/00

(54) **INSTALLATION DE CONDITIONNEMENT THERMIQUE DE PRÉFORMES AVEC REFROIDISSEMENT D'UNE PORTION DE LA PRÉFORME PAR UNE LAME D'AIR PULSÉ**
ANLAGE ZUM THERMISCHEN KONDITIONIEREN VON VORFORMLINGEN, WOBEI EIN TEIL DER VORFORM VON EINEM GEBLASENEN LUFTVORHANG GEKÜHLT WIRD
INSTALLATION FOR THERMALLY CONDITIONING PREFORMS WITH ONE PORTION OF THE PREFORM BEING COOLED BY A BLOWN CURTAIN OF AIR

(30) Priorité: 13.02.2014 FR 1451119
(43) Date de publication de la demande: 21.12.2016
(73) Titulaire: Sidel Participations, 76930 Octeville-sur-Mer (FR)
(72) Inventeur: REMY, Mikaël, 76930 Octeville-sur-Mer (FR); HEBERT, Stéphane, 76930 Octeville-sur-Mer (FR); HABOURY, Pascal, 76930 Octeville-sur-Mer (FR); CIRETTE, Damien, 76930 Octeville-sur-Mer (FR); FEVRE, Sébastien, 76930 Octeville-sur-Mer (FR); LEMAISTRE, Eric, 76930 Octeville-sur-Mer (FR); DERRIEN, Mickaël, 76930 Octeville-sur-Mer (FR)
(74) Mandataire: Grassin d'Alphonse, Emmanuel Jean Marie
(86) Numéro de dépôt international: PCT/EP2015/052266
(87) Numéro de publication internationale: WO 2015/121122

(56) Documents cités:
- EP-A2- 2 377 668
- EP-A2- 2 380 719
- DE-A1-102009 057 021
- DE-A1-102010 026 166

## Description

### DOMAINE TECHNIQUE DE L'INVENTION

L'invention concerne une installation de conditionnement thermique en série de préformes froides destinées à être transformées en récipients finaux par formage, notamment par étirage ou étirage-soufflage.

De telles installations sont décrites dans les documents EP2377668A2, EP2380719A2, DE102010026166A1 et DE102009057021A1.

### ARRIERE PLAN TECHNIQUE DE L'INVENTION

L'invention concerne plus particulièrement une installation de conditionnement thermique en série de préformes froides en matériau thermoplastique destinées à être transformées en récipients finaux par formage, chaque préforme présentant un axe principal vertical passant par un col, l'installation comportant :
- au moins un organe de maintien d'une préforme par son col dans une zone de conditionnement thermique, la zone de conditionnement thermique étant divisée verticalement en une première partie de chauffage qui est destinée à loger un corps de la préforme, la partie de chauffage étant exposée à au moins un organe de chauffage du corps de la préforme, et en une deuxième partie de refroidissement qui est destinée à loger le col de la préforme ;
- au moins un dispositif de refroidissement d'au moins une portion de la surface de la préforme par production d'un flux de gaz, notamment d'air, traversant la zone de conditionnement thermique.

Les préformes sont généralement obtenues par injection d'un matériau thermoplastique. Puis, elles sont refroidies et stockées en vue de leur transformation ultérieure en récipients finaux. L'obtention du récipient final est réalisée lors d'une opération de formage, par exemple par soufflage ou par étirage-soufflage, des parois de la préforme.

Les préformes comportent classiquement un corps qui est destiné à être déformé lors de l'opération de formage, et un col qui est déjà moulé à sa forme définitive. Il est donc important de protéger le col de la préforme afin qu'il ne soit ni déformé ni endommagé durant la fabrication du récipient final.

Pour ce faire, la préforme est conditionnée thermiquement juste avant l'opération de formage par passage dans l'installation de conditionnement thermique. Dans cette installation, le corps de la préforme est rendu malléable par chauffage du matériau thermoplastique constituant ses parois au-delà d'une température de transition vitreuse, tandis que le col est maintenu à une température inférieure à ladite température de transition vitreuse pour éviter toute déformation du col.

A cet effet, l'installation de conditionnement thermique est conçue pour que les portions de préforme à chauffer, c'est-à-dire le corps, soient reçues dans une partie de chauffage de l'installation, tandis que les portions de la préforme devant rester "froide" sont reçues dans une partie de refroidissement de l'installation.

S'agissant d'une installation de conditionnement thermique en grandes séries de préformes, les préformes sont montées sur un support mobile de manière à permettre l'acheminement, généralement en file, des préformes vers un poste de formage durant leur conditionnement thermique.

Pour maintenir le col de la préforme à une température froide, il est connu de faire circuler un premier flux d'air froid dans la partie de refroidissement de l'installation. Ce flux d'air est généralement transversal par rapport à la direction de déplacement des préformes, et il est orienté orthogonalement à un axe principal des préformes.

Pour produire ce flux d'air, il est bien connu d'utiliser des ventilateurs qui brasse de l'air pour obtenir un flux d'air turbulent. Le flux d'air turbulent est conduit jusqu'à la partie de refroidissement par l'intermédiaire de conduites.

En outre, il est aussi connu de faire circuler un deuxième flux d'air turbulent, distinct du premier flux d'air froid mais parallèle à celui-ci, dans la partie de chauffage. Ceci permet de garantir que le corps de la préforme soit chauffé de manière homogène. Ceci permet aussi de ne pas détériorer la peau extérieure de la préforme tout en maîtrisant le gradient de température dans l'épaisseur de la paroi de la préforme. La température de l'air de ce deuxième flux d'air turbulent s'élève assez rapidement sous l'effet de la chaleur ambiante de la partie de chauffage.

Il est aussi connu d'utiliser un ventilateur pour obtenir ce deuxième flux d'air turbulent.

Pour réduire les échanges thermiques entre la partie chaude et la partie froide, il est aussi connu d'agencer des rails le long du trajet des préformes. Ces rails permettent de diminuer l'ouverture entre les deux parties de l'installation. Ces deux rails sont refroidis par circulation interne d'un liquide caloporteur.

Néanmoins, on a observé que le flux d'air turbulent employé pour réguler tant la température du col que celle du corps ne permettait pas d'obtenir une température optimale pour certaines portions de la préforme.

Une préforme ainsi conditionnée thermiquement présente en effet un gradient de température très important, notamment dans un tronçon du corps situé contre le col. Un tel tronçon sera par la suite appelé "tronçon de sous-col".

Ainsi, une partie marginale du premier flux d'air turbulent, utilisé pour refroidir le col, passe au travers de l'espace réservé entre les deux rails pour venir refroidir légèrement la température du tronçon de sous-col. Il en résulte que l'étirage de ce tronçon de sous-col doit être traité spécifiquement lors de l'opération de formage, notamment par commande d'une tige d'étirage. Ceci entraîne des difficultés de réglage lors de l'opération de formage.

De même, le deuxième flux d'air a pour but d'homogénéiser la température du corps. Néanmoins, la préforme présente, à son extrémité fermée, un point d'injection qui est constitué du matériau thermoplastique dans un état peu étirable. Il serait donc avantageux de pouvoir chauffer la portion de corps située au voisinage direct de ce point d'injection pour en faciliter l'étirage lors de l'étape de formage.

Par ailleurs, les ventilateurs et les conduites utilisés pour guider les flux d'air turbulent sont extrêmement encombrants. Un tel équipement de ventilation peut parfois occuper plus de la moitié du volume de l'installation de conditionnement thermique.

### BREF RESUME DE L'INVENTION

L'invention propose une installation thermique du type décrit précédemment, caractérisée en ce que le dispositif de refroidissement produit une lame de gaz pulsé à écoulement laminaire à travers une fente axiale de sortie orthogonale à sa direction d'écoulement.

Selon d'autres caractéristiques de l'invention :
- le dispositif de refroidissement comporte une chambre de pression alimentée en gaz comprimé dont un côté forme une tuyère convergente linéaire débouchant par la fente de sortie de la lame de gaz pulsé ;
- la zone de conditionnement thermique forme un couloir à travers lequel les préformes défilent orthogonalement à leur axe vertical par déplacement des organes de maintien ;
- la partie de chauffage et la partie de refroidissement sont séparées par deux rails longitudinaux de séparation qui délimitent transversalement un passage longitudinal pour permettre le défilement des préformes à cheval sur les deux parties de la zone de conditionnement thermique ;
- la fente de sortie de la lame de gaz pulsé est orientée parallèlement à la direction de déplacement des préformes ;
- la fente de sortie du dispositif de refroidissement est agencée à proximité de la partie de refroidissement, la direction d'écoulement de la lame de gaz pulsé étant braquée vers le col des préformes ;
- la fente de sortie est agencée verticalement à la même hauteur que le col des préformes, la direction d'écoulement de la lame de gaz pulsé étant perpendiculaire à l'axe vertical de la préforme ;
- la fente de sortie est agencée verticalement sous le col de la préforme, la direction d'écoulement de la lame de gaz pulsé formant avec l'axe vertical de la préforme un angle d'inclinaison, la direction d'écoulement étant braquée, au-delà du col des préformes, vers le passage délimité entre les deux rails ;
- le dispositif de refroidissement est monté mobile entre une première position dans laquelle la direction d'écoulement est orientée transversalement, et une deuxième position dans laquelle la direction d'écoulement est braquée vers le passage délimité entre les deux rails ;
- le dispositif de refroidissement est agencé sous l'un des rails ;
- un interstice est réservé entre le rail et le dispositif de refroidissement pour permettre l'aspiration d'air, par effet Venturi, entre le rail et le dispositif de refroidissement par la lame de gaz pulsé ;
- la lame de gaz pulsé est injectée directement dans la partie de chauffage ;
- la direction d'écoulement de la lame de gaz pulsé est dirigée parallèlement à l'axe vertical de la préforme ;
- la lame de gaz pulsé est tangente au corps de la préforme ;
- l'axe d'écoulement de la lame de gaz pulsé est agencée à une distance transversale déterminée de la surface de la préforme ;
- la fente de sortie est montée coulissante transversalement pour permettre de régler la position transversale de la lame de gaz pulsé dans la partie de chauffage ;
- la direction d'écoulement de la lame de gaz pulsé est perpendiculaire à l'axe vertical des préformes, la lame de gaz pulsé étant braquée vers un tronçon déterminé à refroidir du corps des préformes ;
- la fente de sortie est montée mobile verticalement pour permettre de sélectionner le tronçon à refroidir du corps ;
- les préformes défilent dans la zone de conditionnement thermique en tournant sur elles-mêmes à une vitesse de révolution déterminée, l'installation comportant une pluralité de dispositifs de refroidissement, la fente de sortie de chacun desdits dispositifs étant agencée parallèlement à l'axe des préformes, chaque lame de gaz pulsé étant injectée directement dans la partie de chauffage, la direction d'écoulement de chaque lame de gaz pulsé étant orientée normalement au sens de défilement des préformes, les lames de gaz pulsé étant écartées les unes des autres d'un pas déterminé pour qu'une section déterminée du corps de chaque préforme soit refroidie successivement par chaque lame de gaz pulsé ;
- l'installation comporte des évents qui sont agencés en opposition de la fente de sortie par rapport à la partie de chauffage pour permettre l'évacuation de la lame de gaz pulsé de la partie de chauffage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de dessus qui représente une chaîne de production en série de récipients finaux à partir de préformes, la chaîne de production comportant une installation de conditionnement thermique réalisée selon les enseignements de l'invention ;
- la figure 2 est une vue de profil qui représente une préforme ;
- la figure 3 est une vue en coupe transversale qui représente l'installation de conditionnement thermique de la figure 1 réalisée selon un premier mode de réalisation de l'invention dans lequel le col des préformes est refroidi par un dispositif de refroidissement dit "air knife" ;
- la figure 4 est une vue en perspective avec arrachement qui représente un dispositif de refroidissement dit "air knife" qui équipe l'installation de conditionnement thermique de la figure 3 ;
- la figure 5 est une vue en coupe horizontale selon le plan de coupe 5-5 de la figure 3 qui représente l'agencement du dispositif de refroidissement le long du trajet de conditionnement thermique des préforme ;
- la figure 6 est une vue similaire à celle de la figure 3 qui représente un deuxième mode de réalisation de l'invention dans lequel le dispositif de refroidissement est incliné par rapport à celui de la figure 3 ;
- la figure 7 est une vue similaire à celle de la figure 3 qui représente un troisième mode de réalisation de l'invention dans lequel le corps de la préforme est refroidi par un dispositif de refroidissement dit "air knife" produisant une lame d'air pulsée s'écoulant verticalement ;
- la figure 8 est une vue similaire à celle de la figure 3 qui représente un quatrième mode de réalisation de l'invention dans lequel un tronçon du corps de la préforme est refroidi par un dispositif de refroidissement dit "air knife" produisant une lame d'air pulsée s'écoulant horizontalement ;
- la figure 9 est une vue en coupe horizontale passant à travers le tunnel d'une installation de conditionnement thermique réalisée selon un cinquième mode de réalisation de l'invention dans lequel un secteur du corps de la préforme est refroidi par plusieurs dispositifs de refroidissement dits "air knife" produisant une lame d'air pulsé verticale s'écoulant selon une direction transversale.

### DESCRIPTION DETAILLEE DES FIGURES

Dans la suite de la description, des éléments présentant une structure identique ou des fonctions analogues seront désignés par des signes de référence identiques.

Dans la suite de la description, on adoptera à titre non limitatif des orientations longitudinale, verticale et transversale indiquées par le trièdre "L,V,T" des figures. Ces orientations forment un repère attaché à l'organe de maintien de la préforme et elles sont utilisées à titre de référence géométrique pour la description des figures.

Ainsi, l'orientation verticale ne fait notamment pas référence à la direction de la gravité, l'invention étant applicable aussi bien à des installations de conditionnement thermique dites "col en haut", qu'à des installations de conditionnement thermique dites "col en bas".

De même, l'orientation longitudinale est utilisée pour indiquer la tangente au trajet de déplacement des préformes. L'invention est ainsi applicable indifféremment à des préformes se déplaçant selon une trajectoire rectiligne ou curviligne.

Dans la description et dans les revendications, les termes "froid" et "chaud" se rapportant à la préformes signifient respectivement en-deçà et au-delà de la température de transition vitreuse du matériau thermoplastique la constituant.

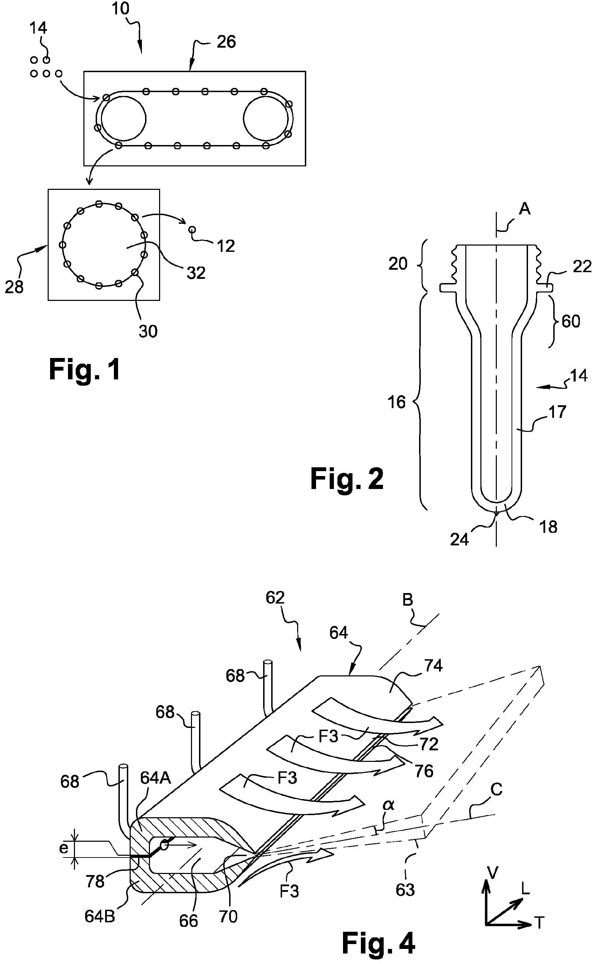

On a représenté à la figure 1 une chaîne 10 de production en grandes séries de récipients 12 en matériau thermoplastique. Les récipients 12 finaux sont obtenus par formage de préformes 14.

Chaque préforme 14 est réalisée en un matériau thermoplastique tel que du polyéthylène téréphtalate, plus connu sous son acronyme "PET". Les préformes 14 sont par exemple obtenues par moulage par injection.

A la fin de leur moulage par injection, les préformes 14 sont refroidies brutalement, par exemple par trempe, pour conférer au matériau thermoplastique un état amorphe. Il est ainsi possible de rendre le matériau thermoplastique à nouveau malléable par chauffage au-delà d'une température de transition vitreuse.

On a représenté plus en détails à la figure 2 une telle préforme 14. La préforme 14 présente un corps 16 qui présente une paroi 17 cylindrique tubulaire d'axe principal vertical "A". En référence à la figure 2, le corps 16 est fermé vers le bas par un fond 18 de forme généralement hémisphérique. Le corps 16 est ouvert axialement vers le haut par l'intermédiaire d'un col 20.

Le col 20 présente une forme cylindrique tubulaire coaxiale à l'axe "A" du corps 16. Le col 20 est déjà moulé à sa forme définitive. Il est pourvu sur sa face externe de moyens de fixation d'un bouchon, tel qu'un filetage. Une collerette 22 saillante radialement marque la séparation entre le corps 16 et le col 20. Par la suite, on considérera que la collerette 20 fait partie du col 20.

Le fond 18 du corps 16 présente, au niveau de son intersection avec l'axe "A" de la préforme 14, un point 24 d'injection, correspondant au point d'injection du matériau thermoplastique pendant son moulage. Les techniques de moulage par injection ne permettent pas d'obtenir un état parfaitement amorphe pour le matériau thermoplastique situé au point 24 d'injection et à son voisinage. Le matériau thermoplastique constituant le point 24 d'injection et son voisinage est ainsi dans un état semi-cristallin.

On a représenté à la figure 1 la chaîne 10 de production qui comporte principalement, une installation 26 de conditionnement thermique et un poste 28 de formage.

L'installation 26 de conditionnement thermique est destinée à chauffer en série le corps 16 des préformes 14 au-delà de la température de transition vitreuse, tout en maintenant le col 20 des préformes 14 à une température inférieure à la température de transition vitreuse. Ceci permet ainsi de garantir que le col 20 gardera sa forme définitive telle qu'obtenue après injection, tandis que le corps 16 sera suffisamment malléable pour permettre son formage. Les préformes 14 sont ici déplacées dans l'installation 26 de conditionnement thermique le long d'un n trajet prédéfini de conditionnement thermique permettant le déplacement des préformes 14 depuis un point d'entrée des préformes 14 froides jusqu'à un point de sortie des préformes 14 chaudes, à proximité du poste 28 de formage pendant leur conditionnement thermique. Une telle installation 26 sera décrite plus en détail par la suite.

Le poste 28 de formage comporte une pluralité d'unités 30 de moulage qui sont ici montées sur un carrousel 32 permettant le déplacement des préformes 14 durant leur formage. Chaque unité 30 de moulage comporte un moule (non représenté) destiné à recevoir une préforme 14 conditionnée thermiquement, et des moyens (non représentés) d'injection d'un fluide sous pression dans la préforme 14 pour permettre le formage par expansion du corps 16 de la préforme 14.

Cette expansion peut être accompagnée d'une opération d'étirage de la préforme 14 selon son axe "A", par exemple au moyen d'une tige (non représentée) d'étirage. Ceci est notamment le cas pour un formage dit "bi-orienté".

Une telle chaîne 10 de fabrication permet de produire des récipients 12 rapidement et en grandes séries.

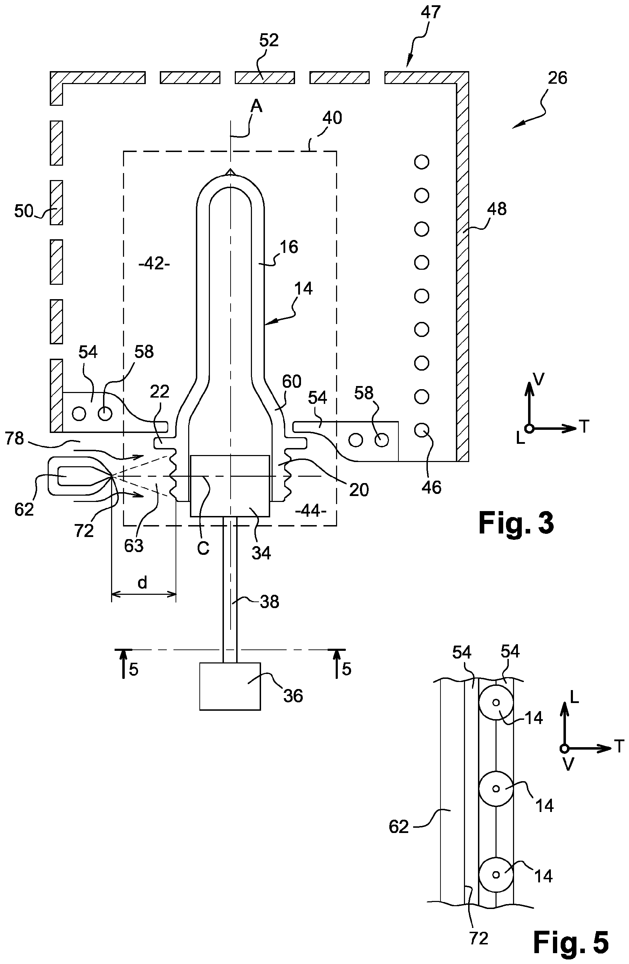

Un premier mode de réalisation de l'installation 26 de conditionnement thermique va à présent être décrit plus en détails en référence aux figures 3 et 4.

L'installation 26 de conditionnement thermique comporte une pluralité d'organes 34 de maintien d'une préforme 14 par son col 20. Chaque organe 34 de maintien est ici formé par un mandrin à expansion qui est destiné à être inséré à force dans le col 20 de la préforme 14.

Les organes 34 de maintien sont montés l'un derrière l'autre sur un moyen de transport telle qu'une chaîne, dont un maillon 36 est représenté à la figure 3, de manière à défiler selon la direction longitudinale "L" le long d'un trajet prédéterminé de conditionnement thermique, orthogonalement à leur axe "A" vertical.

Chaque organe 34 de maintien est ici monté sur le maillon 36 par l'intermédiaire d'un arbre 38 vertical rotatif coaxial à l'axe "A" de la préforme 14 portée par ledit organe 34 de maintien. L'organe 34 de maintien est ainsi susceptible d'être mis en rotation autour de son axe lors du déplacement des maillons 36, entraînant ainsi la rotation de la préforme 14 portée autour de son axe "A" à une vitesse de révolution déterminée durant son déplacement le long du trajet de conditionnement thermique.

L'installation 26 de conditionnement thermique comporte aussi une zone 40 de conditionnement thermique qui est délimitée transversalement par la forme rectangulaire en traits interrompus de la figure 3. L'organe 34 de maintien est conçu pour maintenir la préforme 14 à l'intérieur de la zone 40 de conditionnement thermique durant son déplacement le long de son trajet de conditionnement thermique.

La zone 40 de conditionnement thermique est déterminée comme une zone dans laquelle le passage d'un flux d'air est susceptible d'influencer directement et sensiblement la température de surface des préformes 14.

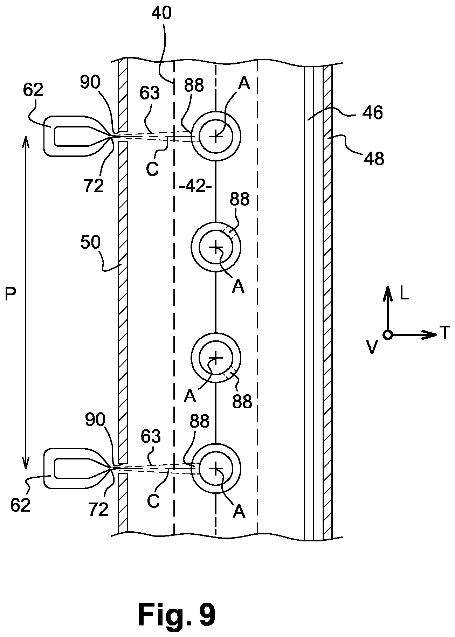

Ainsi, la zone 40 de conditionnement thermique forme un couloir longitudinal à travers lequel les préformes défilent orthogonalement à leur axe "A" vertical par déplacement des organes 34 de maintien, comme cela est notamment visible à la figure 9.

La zone 40 de conditionnement thermique est divisée verticalement en :
- une première partie 42 de chauffage, qui est ici représentée en haut à la figure 2, et qui est destinée à loger le corps 16 de la préforme 14, et
- une deuxième partie 44 de refroidissement, qui est ici agencée en bas à la figure 2, et qui est destinée à loger le col 20 de la préforme 14.

Dans l'exemple représenté à la figure 3, les préformes 14 défilent avec leur col 20 orienté vers le bas.

On comprendra que l'invention est aussi applicable à une installation permettant le défilement des préformes selon une autre orientation, notamment avec leur col orienté vers le haut.

La première partie 42 de chauffage est exposée à au moins un organe 46 de chauffage. La première partie 42 de chauffage est agencée dans une enceinte de chauffage, appelée par la suite "tunnel 47", qui comporte les organes 46 de chauffage. Le tunnel 47 de chauffage est ainsi délimité transversalement par deux cloisons 48, 50 latérales verticales longitudinales.

De manière non limitative, le tunnel 47 de chauffage est ici fermé vers le haut par une cloison 52 horizontale.

Dans l'exemple représenté à la figure 2, les organes 46 de chauffage sont formés par des moyens d'émission d'ondes infrarouge, par exemple des lampes, qui sont agencées le long de la cloison 48 latérale située à droite à la figure 2.

La face interne des cloisons 48, 50, 52 est avantageusement recouverte d'un revêtement ou matériau réfléchissant permettant de concentrer le rayonnement chauffant émis par les organes 46 de chauffage vers la partie 42 de chauffage.

Comme représenté à la figure 2, le contour de la partie 42 de chauffage, en coupe transversale, est agencé transversalement au centre du tunnel 47, à proximité des organes 46 de chauffage. Dans le type d'installation 26 de conditionnement thermique représenté aux figures, les organes 46 de chauffage sont néanmoins agencés à distance de la préforme 14, à l'extérieur de la zone 40 de conditionnement thermique, pour éviter que les préformes 14 en soient brûlées par un chauffage trop intense.

La partie 42 de chauffage est ouverte vers le bas sur la partie 44 de refroidissement pour permettre le défilement des préformes 14 à cheval sur les deux parties 42, 44 de la zone 40 de conditionnement thermique. Cependant, pour limiter la transmission de chaleur, par rayonnement ou par convection, depuis la partie 42 de chauffage jusqu'à la partie 44 de refroidissement, il est connu de réduire cette ouverture à un passage longitudinal à peine plus large que le diamètre du corps 16 de la préforme 14. A cet effet, deux rails 54 longitudinaux sont agencés transversalement de part et d'autre du trajet de conditionnement thermique, à la frontière entre les deux parties 42, 44.

Pour que ces rails 54 soient suffisamment efficaces pour faire barrière à la chaleur, ils sont refroidis par circulation interne d'un fluide caloporteur froid dans un circuit 58 interne.

Malgré toutes ces précautions, le col 20 de la préforme 14 est toujours susceptible d'être chauffé soit par le rayonnement thermique passant à travers le passage longitudinal, soit par conduction de chaleur à travers le matériau thermoplastique entre le corps 16 et le col 20.

Pour tempérer le col 20, il est connu d'équiper l'installation 26 de conditionnement thermique avec au moins un dispositif de refroidissement du col 20 par production d'un flux d'air traversant la zone 40 de conditionnement thermique, et plus particulièrement la partie 44 de refroidissement. Ce flux d'air sera appelé par la suite "flux d'air de col".

Néanmoins, les dispositifs de refroidissement connus ne permettent pas d'obtenir un refroidissement qui soit à la fois efficace, économique et précis.

En effet, on a constaté qu'il était très difficile de chauffer un tronçon 60 du corps 16 de la préforme 14 situé directement sous la collerette 22, dit "tronçon 60 de sous-col" au-delà de la température de transition vitreuse, tout en maintenant le col 20, et plus particulièrement la collerette 22, au-dessous de sa température de transition vitreuse.

Les moyens de refroidissement connus ne permettent en effet pas d'obtenir un flux d'air de col focalisé de manière suffisamment précise sur le col 20 sans réduire la température du tronçon 60 de sous-col.

La problématique de la précision du flux d'air se pose aussi pour d'autres portions de la préforme 14, et plus particulièrement pour le fond 18 de la préforme 14. En effet, il est connu de faire circuler un flux d'air transversal dans la partie 42 de chauffage de la zone 40 de conditionnement thermique pour permettre un chauffage homogène du corps 16 de la préforme 14. Ceci permet notamment d'éviter que certains tronçons du corps 16 soient chauffés de manière trop intense. Ce flux d'air sera désigné par la suite "flux d'air de corps".

Or, le matériau thermoplastique constituant le point 24 d'injection et son voisinage sont dans un état semi-cristallin. De ce fait, le matériau constituant le point 24 d'injection est très peu étirable. Pour pouvoir rendre le fond 18 de la préforme 14 suffisamment malléable pour l'opération de formage, il est donc nécessaire de chauffer le point 24 d'injection et son voisinage à une plus haute température que le reste du corps 16.

Cependant, le flux d'air de corps n'est pas suffisamment directif pour permettre d'ajuster précisément la température du point 24 d'injection par rapport au reste du corps 16, en d'autres termes, le flux d'air turbulent n'est pas délimité de manière suffisamment précise par rapport à l'air ambiant.

L'invention propose de résoudre ce problème de précision des flux d'air en utilisant un dispositif 62 de refroidissement qui produit une lame 63 de gaz pulsé à écoulement laminaire. Le gaz utilisé est ici de l'air. Un tel dispositif 62 de refroidissement est plus connu sous son appellation en langue anglaise "air knife" ou sous sa traduction littérale "couteau d'air".

Un exemple d'un tel dispositif 62 de refroidissement est représenté à la figure 4. Pour les besoins de la description, le dispositif 62 de refroidissement est ici décrit dans son agencement de la figure 3. Comme on le verra par la suite, le dispositif 62 de refroidissement pourra occuper d'autres positions par rapport au trièdre "L,V,T".

Il se présente sous la forme d'une rampe 64, allongée selon un axe "B" rectiligne ou curviligne, ici orientée longitudinalement, qui renferme une chambre 66 de pression. La chambre 66 de pression est allongée sur toute la longueur de la rampe 64. La chambre 66 de pression est fermée à ses deux extrémités axiales. La rampe 64 présente par exemple une longueur comprise entre 200 mm et 240 mm.

La chambre 66 de pression est alimentée en gaz comprimé, ici en air comprimé à une pression supérieure à la pression ambiante, par exemple 7 bars, par l'intermédiaire d'une pluralité de conduits 68 d'alimentation qui sont répartis axialement le long d'un côté latéral de la rampe 64.

Un autre côté latéral, ici délimitant transversalement la chambre 66 de pression, est conformé en une tuyère 70 convergente linéaire débouchant, ici transversalement, à l'extérieur par une fente 72 axiale de sortie de la lame d'air pulsé. La fente 72 est parallèle à l'axe "B" de la rampe 64. En d'autres termes, la forme de la tuyère 70 convergente est obtenue géométriquement par translation axiale selon l'axe "B" d'un profil transversal qui converge depuis la chambre 66 vers la fente 72.

La fente 72 est délimitée, ici verticalement, par deux lèvres axiales de la tuyère 70.

Une face 74 externe supérieure et une face 76 externe inférieure de la tuyère 70 présentent ensemble un profil convergent transversalement depuis l'axe "B" de la rampe 64 vers la fente 72. Plus particulièrement, les faces 74, 76 externes de la tuyère 70 présentent chacune une arête axiale d'extrémité transversale qui forme une des lèvres de la fente 72.

La rampe 64 est ici divisée selon un plan, ici horizontal, passant par la fente 72 en une première demi-coque 64A, représentée en bas à la figure 4, et en une deuxième demi-coque 64B, représentée en haut à la figure 4.

Les deux demi-coques 64A, 64B sont fixées de manière étanche l'une contre l'autre avec interposition d'une cale 78 très fine permettant de régler l'ouverture "e" verticale de la fente 72 entre les deux lèvres. Ainsi, la seule ouverture de sortie de l'air est formée par la fente 72. L'ouverture "e" est par exemple comprise entre 10 µm et 3 mm, et de préférence entre 10 µm et 100 µm.

La lame 63 d'air produite par le dispositif 62 de refroidissement s'écoule transversalement selon un plan médian transversal depuis la fente 72. En coupe transversale, la lame 63 d'air pulsé s'écoule ainsi selon un axe "C" d'écoulement orienté transversalement. Du fait de la forme de la tuyère 70 et de l'ouverture très réduite de la fente 72, au niveau de la fente 72, l'air s'écoule de manière très rapide et de manière non turbulente. En d'autres termes, la tuyère 70 est conçue pour permettre d'accélérer le flux d'air de manière laminaire jusqu'à la fente 72.

L'ouverture réduite de la fente 72 produit ainsi une lame 63 d'air directive, c'est-à-dire que la délimitation entre le flux d'air s'écoulant à grande vitesse dans la lame 63 d'air pulsé et l'air ambiant est très nette du fait de l'absence de turbulence, tout au moins jusqu'à une distance transversale dite d'efficacité de la fente 72 de sortie. La distance d'efficacité est par exemple comprise entre 15 mm et 150 mm. Au-delà de cette distance d'efficacité, l'écoulement de la lame 63 d'air pulsé commence à devenir turbulent et à perdre en directivité et en vitesse jusqu'à se diluer dans l'air ambiant.

La lame 63 d'air pulsé présente de plus une épaisseur réduite permettant de refroidir des portions très localisées de la préforme 14. Ainsi, en coupe transversale, la lame 63 d'air pulsé présente une forme triangulaire divergente depuis la fente 72 de sortie avec un demi-angle "α" au sommet très restreint de part et d'autre de l'axe "C" d'écoulement. Il est ainsi possible de focaliser la lame 63 d'air pulsé sur une portion précise de la préforme 14. Le demi-angle "α" au sommet est par exemple compris entre 7,5° et 20°, et par exemple 16,5°, permet de conférer à la lame 63 d'air pulsé une précision de refroidissement suffisante par rapport aux dimensions de la préforme 14.

Du fait de la forme convergente de la tuyère 70, l'air sort de la fente 72 avec une grande vélocité, par exemple entre 20 m.s⁻¹ et 70 m.s⁻¹. La géométrie des faces 74, 76 externes de la tuyère 70 favorise l'aspiration d'air ambiant par la lame 63 de gaz pulsé par effet Venturi, comme indiqué par les flèches "F3" de la figure 4. La lame 63 d'air pulsée est ainsi susceptible de multiplier jusqu'à 40 fois son débit initial en aspirant de l'air ambiant dans son écoulement.

Selon un premier mode de réalisation de l'invention qui est représenté à la figure 3, la lame 63 d'air pulsé est utilisée pour refroidir de manière précise le col 20 pour le maintenir au-dessous de sa température de transition vitreuse sans refroidir le tronçon 60 de sous-col du corps 16.

Dans ce premier mode de réalisation, la fente 72 de sortie du dispositif 62 de refroidissement est agencée à proximité de la partie 44 de refroidissement, la direction "C" d'écoulement de la lame 63 d'air pulsé étant braquée vers le col 20 des préformes 14.

Pour ce faire, la fente 72 axiale du dispositif 62 de refroidissement est orientée longitudinalement, de manière parallèle à la direction longitudinale de déplacement des préformes 14, comme cela est illustré à la figure 5. Ceci permet ainsi à un même dispositif 62 de refroidissement de produire une lame 63 d'air pulsé pour refroidir simultanément plusieurs préformes 14 sur au moins une fraction du trajet de conditionnement thermique. Le col 20 des préformes 14 est entièrement refroidi du fait de la rotation propre des préformes 14 autour de leur axe "A" pendant leur défilement.

Selon ce premier mode de réalisation de l'invention, la fente 72 de sortie est agencée verticalement à la même hauteur que le col 20 de la préforme 14. Ainsi l'axe "C" d'écoulement de la lame 63 de gaz pulsé est perpendiculaire à l'axe "A" vertical de la préforme 14.

La fente 72 est agencée à une distance "d" déterminée du col 20. Cette distance "d" est sélectionnée de manière que le col 20 soit refroidi sans que le tronçon 60 de sous-col ne soit refroidi par la lame 63 d'air pulsé. Cette distance "d" est inférieure à la distance d'efficacité de manière que la lame 63 d'air pulsé demeure directive et non turbulente lorsqu'elle atteint le col 20 de la préforme 14. La distance "d" est par exemple comprise entre 5 mm et 50 mm.

Dans l'exemple représenté à la figure 3, le dispositif 62 de refroidissement est agencé verticalement sous l'un des rails 54 bordant le passage. Un interstice 78 est réservé verticalement entre ledit rail 54 et le dispositif 62 de refroidissement pour permettre l'aspiration d'air entre le rail 54 et la rampe 64 par la lame 63 de gaz pulsé par effet Venturi, comme indiqué par les flèches de la figure 3. Ceci permet d'augmenter le débit d'air dans l'écoulement, augmentant ainsi le rendement du dispositif 62 de refroidissement.

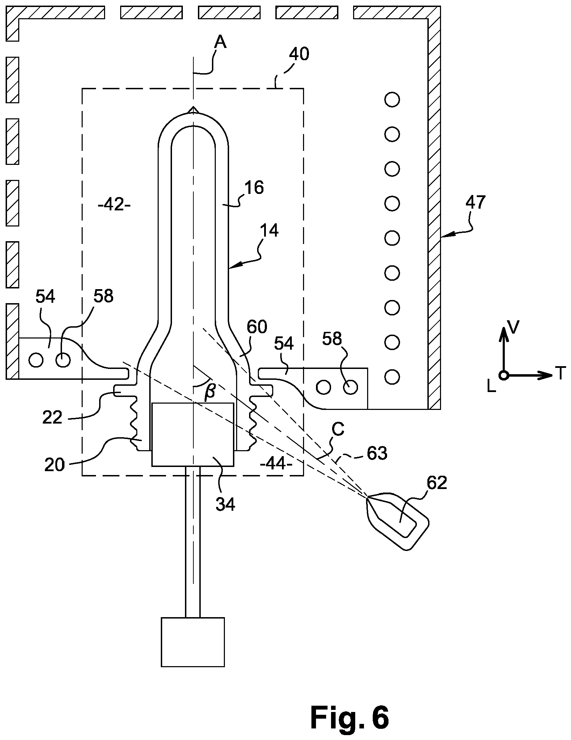

Un deuxième mode de réalisation de l'invention est représenté à la figure 6. Ce deuxième mode de réalisation est très proche du premier mode de réalisation car le dispositif 62 de refroidissement est aussi agencé à proximité de la partie 44 de refroidissement de manière à refroidir précisément le col 20 de la préforme 14.

La seule différence entre le premier mode de réalisation et le second mode de réalisation est la suivante. La fente 72 de sortie est ici agencée verticalement sous la préforme 14 de manière que l'axe "C" d'écoulement de la lame 63 de gaz pulsé forme avec l'axe "A" vertical de la préforme 14 un angle "β" d'inclinaison pour que l'axe "C" d'écoulement demeure braqué vers le col 20 de la préforme 14.

On a constaté que, de manière surprenante, l'ensemble de la préforme 14, c'est-à-dire le col 20 et le corps 16, étaient refroidi de manière adaptée au formage lorsque l'angle "β" était braqué, au-delà du col 20 des préformes, vers le passage délimité entre les deux rails 54.

En effet, la lame 63 d'air pulsé atteint tout d'abord à pleine vitesse le col 20 pour le refroidir de manière efficace. La collerette 22 forme un obstacle qui dévie la lame 63 d'air, l'empêchant ainsi de refroidir le tronçon 60 de sous-col. Puis, la lame 63 d'air poursuit son écoulement à l'intérieur de la partie 42 de chauffage, en passant entre deux préformes 14 consécutive, provoquant un brassage d'air favorable à l'homogénéisation du chauffage sur le reste du corps 16 de la préforme 14.

Pour bénéficier de ce refroidissement avantageux, la lame 63 d'air doit être précisément orientée pour passer entre les deux rails 54 sans toutefois toucher les bords libres des rails 54. Ceci provoquerait en effet des turbulences susceptibles de refroidir le tronçon 60 de sous-col. Ainsi, seul un dispositif de refroidissement de type "air knife" peut produire une lame 63 d'air pulsé suffisamment précise pour atteindre cet effet de refroidissement avantageux et surprenant.

Selon une variante non représentée de l'invention combinant les deux premiers modes de réalisation, le dispositif 62 de refroidissement est monté mobile à proximité de la partie 44 de refroidissement entre :
- une première position dans laquelle l'axe "C" d'écoulement est orienté transversalement de manière identique à ce qui est décrit dans le premier mode de réalisation, comme illustré à la figure 3, et
- une deuxième position dans laquelle l'axe "C" d'écoulement est braqué vers le passage délimité entre les deux rails 54 de manière identique à ce qui est décrit dans le deuxième mode de réalisation, comme illustré à la figure 6.

Cette variante permet ainsi de régler l'angle "β" d'inclinaison du dispositif 62 de refroidissement pour l'adapter au profil de chauffage souhaité pour les préformes 14.

Un autre avantage de ces deux premiers modes de réalisation est que la lame 63 d'air pulsé est aussi dirigée vers les organes 34 de maintien pour les refroidir lorsqu'ils ne sont pas protégés par le col 20 d'une préforme 14. Une telle situation intervient notamment lors de la phase de démarrage de production, au cours de laquelle l'installation 26 monte en température, ou lorsqu'une préforme est manquante, par exemple suite à un problème de saisie d'une préforme par l'organe 34 de maintien. Le refroidissement provoqué par la lame 63 d'air pulsé est suffisant pour éviter que divers composants de l'organe 34 de maintien, notamment des joints en matériau élastomères, ne soient détériorés par la chaleur produite par les organes 46 de chauffage.

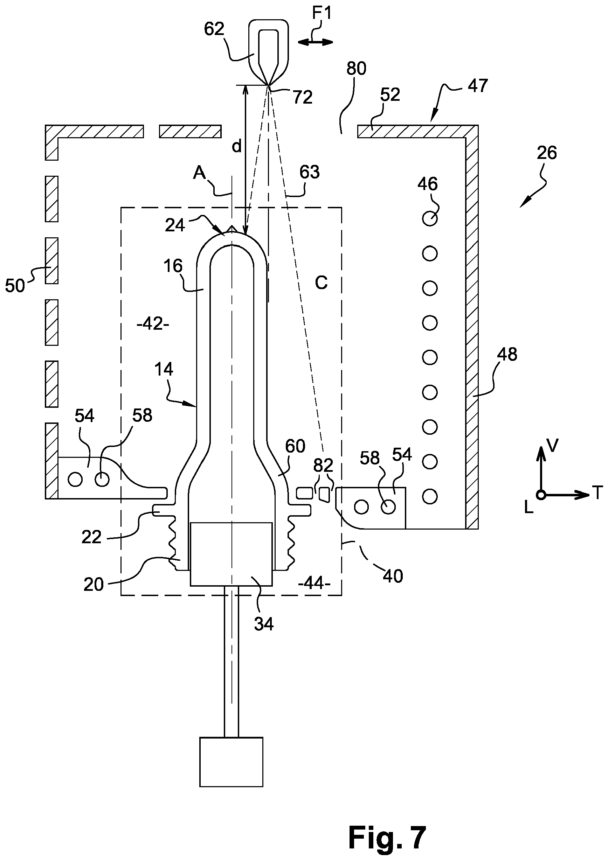

Selon un troisième mode de réalisation de l'invention qui est représenté à la figure 7, la lame 63 de gaz pulsé est injectée directement dans la partie 42 de chauffage pour refroidir spécifiquement le corps 16 de la préforme 14.

Comme dans les deux premiers modes de réalisation, la fente 72 axiale du dispositif 62 de refroidissement est orientée longitudinalement, de manière parallèle à la direction de déplacement des préformes 14. Ceci permet à une même lame 63 d'air pulsé de refroidir simultanément plusieurs préformes 14 sur au moins une fraction de leur trajet de conditionnement thermique.

L'axe "C" d'écoulement de la lame 63 de gaz pulsé est dirigé parallèlement à l'axe "A" vertical de la préforme 14. Dans l'exemple représenté à la figure 7, le dispositif 62 de refroidissement est agencé au-dessus de la cloison 52 supérieure du tunnel 47.

La lame 63 d'air pulsé passe à l'intérieur du tunnel 47 pour atteindre la partie 42 de chauffage à la faveur d'une rainure 80 traversante réalisée dans la cloison 52 supérieure. La lame 63 d'air pulsé se déplace ainsi de haut en bas, depuis le fond 18 de la préforme 14 vers son col 20.

En variante non représentée de l'invention, le dispositif de refroidissement est agencé sous les rails, la lame d'air pulsée se déplaçant alors de bas en haut, depuis le tronçon de sous-col vers le fond de la préforme.

Dans l'exemple représenté à la figure 7, la fente 72 est légèrement décalée transversalement, ici vers la gauche, par rapport à l'axe "A" de la préforme 14 de manière que la lame 63 de gaz pulsé soit tangente avec le corps 16 de la préforme 14. Ainsi, la lame 63 d'air pulsée vient ainsi lécher le corps 16 de la préforme 14 sans toutefois refroidir le point 24 d'injection et son voisinage. Du fait de la rotation propre des préformes 14 durant leur défilement, la totalité du corps 16 de la préforme 14 est exposée cycliquement à la lame 63 d'air pulsé.

Dans cette configuration, la lame 63 d'air pulsé est focalisée de manière à refroidir efficacement le corps 16 de la préforme 14.

L'installation 26 comporte aussi des évents 82 qui sont agencés en opposition de la fente 72 de sortie par rapport à la partie 42 de chauffage pour permettre l'évacuation de la lame 63 de gaz pulsé du tunnel 47.

Dans l'exemple représenté à la figure 7, les évents 82 sont réalisés dans le rail 54 qui est agencé verticalement au droit du dispositif 62 de refroidissement.

Avantageusement, un flux d'air transversal, produit selon le premier mode de réalisation de l'invention ou selon l'état de la technique, est prévu pour emporter l'air chaud sortant par les évents 82 loin du col 20.

Selon une variante non représentée de l'invention, le dispositif 62 de refroidissement est agencé de manière que l'axe "C" de la lame 63 de gaz pulsé soit agencé à une distance transversale déterminée de la surface du corps 16 de la préforme 14. L'axe "C" d'écoulement demeure toutefois dans la partie 42 de chauffage de la zone 40 de conditionnement thermique.

De cette manière, le corps 16 de la préforme 14 est refroidi par l'aspiration d'air ambiant chaud au contact de la préforme 14 par effet Venturi.

Il faut cependant veiller à ce que l'axe "C" d'écoulement ne soit pas trop écarté transversalement de la préforme 14. En effet, on a constaté qu'en cas d'écartement trop important, la lame 63 d'air pulsé venait en contact avec le tronçon 60 de sous-col de la préforme 14 avec trop de force, provoquant un refroidissement intempestif dudit tronçon 60. Par exemple, l'axe "C" d'écoulement de la lame 63 d'air pulsé est écarté transversalement par rapport à l'axe de la préforme d'une distance maximale égale au rayon du corps de la préforme.

Pour permettre de régler l'écartement transversal entre l'axe "A" de la préforme 14 et l'axe "C" d'écoulement, le dispositif 62 de refroidissement est avantageusement monté coulissant transversalement, comme indiqué par la double flèche "F1" de la figure 7. A cet effet, la largeur transversale de la rainure 80 est adaptée à la course transversale de réglage du dispositif 62 de refroidissement. Ceci permet notamment de moduler l'effet de refroidissement du corps 16 par la lame 63 d'air pulsé, mais aussi de pouvoir adapter la lame 63 d'air pulsé à des préformes 14 présentant différents diamètres.

L'agencement du dispositif 62 de refroidissement selon ce troisième mode de réalisation permet de refroidir les portions du corps 16 de la préforme 14 qui en ont besoin, sans toutefois refroidir ni le point 24 d'injection ni le tronçon 60 de sous-col. Ceci est notamment permis par la précision et la directivité de la lame 63 d'air pulsé produite par le dispositif 62 de refroidissement.

En effet, le décalage transversale de l'axe "C" d'écoulement par rapport à l'axe "A" de la préforme 14 est suffisant pour que la lame 63 d'air pulsé ne touche pas le point 24 d'injection, tout en atteignant une section du corps 16.

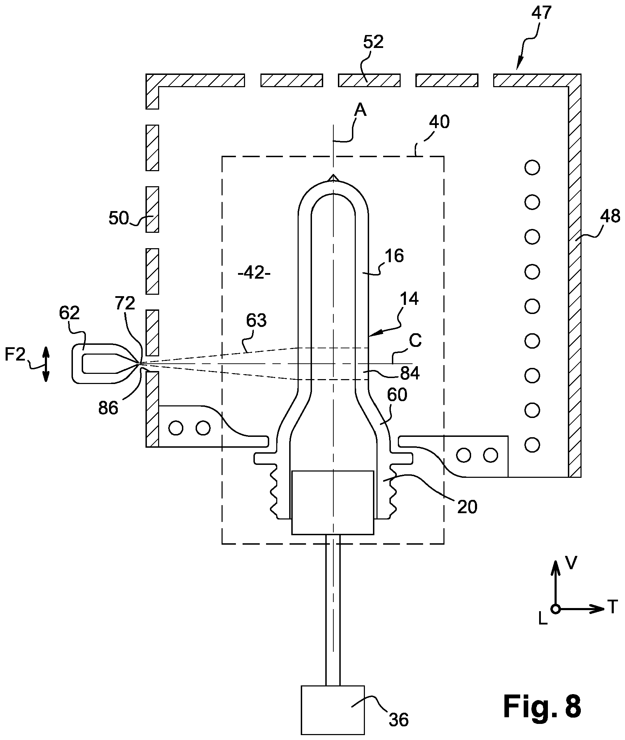

On a représenté à la figure 8 un quatrième mode de réalisation de l'invention. Dans ce mode de réalisation, on cherche à refroidir de manière plus intense un tronçon 84 déterminé du corps 16 de la préforme 14. Une telle opération est connue dans le domaine du formage des récipients sous le nom de "chauffe préférentielle" ou "black bar".

Une telle opération est notamment requise lorsque le récipient final à obtenir présente une forme complexe présentant un tronçon 84 formant étranglement autour de l'axe "A" du récipient dans une partie médiane du corps. Pour permettre d'atteindre un tel résultat, il est préférable que le tronçon 84 formant étranglement soit moins chauffé que le reste du corps 16 pour permettre d'obtenir un récipient présentant une paroi d'épaisseur homogène. Ce tronçon 84 du corps 16 destiné à former étranglement sera dénommé par la suite "tronçon 84 à refroidir".

Jusqu'à présent, une telle opération était réalisée en reculant l'une des lampes 46 de chauffage et/ou en utilisant un écran pour masquer le rayonnement chauffant au niveau du tronçon 84 à refroidir.

Dans ce quatrième mode de réalisation de l'invention, on propose d'utiliser le dispositif 62 de refroidissement.

Comme dans les trois premiers modes de réalisation, la fente 72 axiale du dispositif 62 de refroidissement est orientée longitudinalement, de manière parallèle à la direction de déplacement des préformes 14. Ceci permet à une même lame 63 d'air pulsé de refroidir simultanément plusieurs préformes 14 sur au moins une fraction de leur trajet de conditionnement thermique.

Le dispositif 62 de refroidissement est ici agencé transversalement juste derrière la cloison 50 latérale gauche du tunnel 47, c'est-à-dire en opposition par rapport aux organes 46 de chauffage.

La fente 72 est plus particulièrement agencée verticalement au même niveau que le tronçon 84 à refroidir. L'axe "C" d'écoulement de la lame 63 de gaz pulsé est orientée perpendiculairement à l'axe "A" vertical des préformes 14 de manière que la lame 63 d'air pulsé soit braquée vers le tronçon 84 à refroidir du corps 16 des préformes 14.

La lame 63 d'air pulsé pénètre dans le tunnel 47, et plus particulièrement dans la partie 42 de chauffage, à la faveur d'une rainure 86 longitudinale débouchante pratiquée dans la cloison 50 latérale gauche.

La lame 63 d'air pulsé étant particulièrement directive et précise, elle permet de refroidir précisément le tronçon 84 à refroidir sans influencer la température du reste du corps 16.

Avantageusement, le dispositif 62 de refroidissement est monté mobile verticalement, comme indiqué par la flèche "F2" de la figure 8, pour permettre de sélectionner le tronçon 84 du corps 16 à refroidir. Ceci permet de réaliser des séries de différents modèles de récipients avec une même installation 26 de conditionnement thermique.

On a représenté à la figure 9 un cinquième mode de réalisation de l'invention.

Tout comme dans le quatrième mode de réalisation, l'objectif de ce cinquième mode de réalisation de l'invention est de permettre un chauffage préférentiel de portions déterminées de la préforme 14. Cependant, la portion déterminée est ici formée par un secteur 88 angulaire du corps 16 de la préforme 14 autour de son axe "A".

Une telle opération de chauffage préférentiel est notamment utilisée pour réaliser des récipients finaux non axisymétriques, par exemple des récipients "aplatis" selon une direction radiale préférentielle.

Jusqu'à présent, une telle opération était réalisée en utilisant un écran pour masquer le rayonnement chauffant au niveau du secteur 88 à refroidir.

Dans ce cinquième mode de réalisation de l'invention, on propose d'utiliser plusieurs dispositifs 62 de refroidissement, de type "air knife", similaires à celui qui a été décrit précédemment.

Comme cela a été expliqué précédemment, les préformes 14 défilent dans la zone 40 de conditionnement thermique en tournant sur elles-mêmes à une vitesse de révolution déterminée. En général, la position angulaire des préformes 14 autour de leur axe "A" est fonction de la position longitudinale de l'organe 34 de maintien le long du trajet de conditionnement thermique. Par exemple, les préformes 14 sont entraînées en rotation par l'intermédiaire d'un pignon (non représenté) solidaire en rotation avec l'organe 34 de maintien autour de l'axe "A", le pignon engrenant avec une crémaillère (non représentée) fixe qui est agencée le long du trajet de conditionnement thermique.

Il est donc aisé de connaître le pas "P" duquel une préforme 14 doit avancer le long du trajet de conditionnement thermique pour effectuer une révolution complète.

L'installation 26 de conditionnement thermique comporte ici une pluralité de dispositifs 62 de refroidissement identiques, dont deux ont été représentés à la figure 9. Chaque dispositif 62 de refroidissement est agencé transversalement derrière la cloison 50 latérale gauche, à l'extérieur du tunnel 47.

Chaque dispositif 62 de refroidissement est agencé pour que la fente 72 de sortie soit orientée verticalement, c'est-à-dire parallèlement à l'axe "A" des préformes 14.

Chaque lame 63 de gaz pulsé est injectée directement dans la partie 42 de chauffage, à l'intérieur du tunnel 47, à la faveur d'une rainure 90 verticale traversante pratiquée dans la cloison 50 latérale gauche.

L'axe "C" d'écoulement de chaque lame 63 de gaz pulsé est orientée normalement au sens de défilement des préformes 14. La fente 72 de sortie présente une longueur au moins égale à la hauteur verticale du corps 16 de la préforme 14 de manière que la lame 63 d'air pulsé refroidisse la totalité du secteur 88 à refroidir.

Les fentes 72 de sortie de deux dispositifs 62 adjacents de refroidissement sont écartées longitudinalement du pas "P" déterminé pour que la section 88 à refroidir du corps 16 de chaque préforme 14 soit refroidie successivement par chaque lame 63 de gaz pulsé.

Ainsi, lors du fonctionnement de l'installation, une première préforme 14 défile le long du trajet de conditionnement thermique en tournant sur elle-même. Lorsqu'elle coupe la lame 63 d'air pulsé produite par le premier dispositif 62 de refroidissement, la section 88 à refroidir est dans l'axe "C" d'écoulement, transversalement face à la fente 72 de sortie. Puis, la préforme poursuit son parcours entre les deux lames 63 d'air pulsé en tournant sur elle-même. Le secteur 88 à refroidir fait notamment face aux organes 46 de chauffage situés sur la cloison 48 opposée. A l'issue d'une révolution complète, la préforme 14 coupe la lame 63 d'air pulsé produite par le dispositif 62 de refroidissement suivant, le secteur 88 à refroidir étant agencé dans l'axe "C" d'écoulement face à la fente 72 de sortie. Le secteur 88 à refroidir perd ainsi une partie de la chaleur accumulée face aux organes 46 de chauffage. Ainsi, à la sortie de l'installation 26 de conditionnement thermique, le secteur 88 à refroidir présente une température sensiblement inférieure à celle du reste du corps 16.

Le refroidissement d'un secteur 88 bien défini de la préforme 14 est possible grâce à la précision et à la directivité de la lame 63 d'air pulsé produite par un tel dispositif 62 de refroidissement.

Selon une variante de l'invention applicable à tous les modes de réalisations précédemment décrits, le refroidissement de certaines portions déterminées de la préforme est applicable à une installation de conditionnement thermique présentant une structure différente de celle donnée en exemple. Ainsi, les organes de chauffage peuvent être formés par des bagues d'émission de rayonnement micro-onde, comme cela est décrit plus en détail dans le document US-A1-2010/0052224.

L'installation 26 de conditionnement thermique réalisée selon les enseignements de l'invention permet ainsi de refroidir précisément et très efficacement de portions bien définies des préformes 14, que ce soit le col 14 ou le corps 16.

De plus l'utilisation d'un dispositif 62 de refroidissement de type "air knife" présente de nombreux autres avantages. Ainsi, un tel dispositif 62 est très peu encombrant par rapport aux imposants systèmes de ventilation connus de l'état de la technique.

De plus, un tel dispositif 62 de refroidissement est peu bruyant relativement aux moyens de refroidissement qui est déjà connu d'utiliser sur les installations de conditionnement thermique.

Par ailleurs, un tel dispositif 62 de refroidissement présente un rendement très supérieur au rendement des dispositifs de refroidissement connus de l'état de la technique. Ceci s'explique notamment par l'aspect directif et précis de la lame 63 d'air pulsé ainsi que par l'augmentation du débit par effet Venturi après la sortie de la lame 63 d'air de la fente 72 de sortie.

On comprendra que les différents modes de réalisation précédemment décrits peuvent être combinés entre eux ou avec des dispositifs de refroidissement connus de l'état de la technique.

## Revendications

1. Installation (26) de conditionnement thermique en série de préformes (14) froides en matériau thermoplastique destinées à être transformées en récipients (12) finaux par formage, chaque préforme (14) présentant un axe (A) principal vertical passant par un col (20), l'installation (26) comportant :
- au moins un organe (34) de maintien d'une préforme (14) par son col (20) dans une zone (40) de conditionnement thermique, la zone (40) de conditionnement thermique étant divisée verticalement en une première partie (42) de chauffage qui est destinée à loger un corps (16) de la préforme (14), la partie (42) de chauffage étant exposée à au moins un organe (46) de chauffage du corps (16) de la préforme (14), et en une deuxième partie (44) de refroidissement qui est destinée à loger le col (20) de la préforme (14) ;
- au moins un dispositif (62) de refroidissement d'au moins une portion de la surface de la préforme (14) par production d'un flux de gaz, notamment d'air, traversant la zone (40) de conditionnement thermique ;
**caractérisée en ce que** le dispositif (62) de refroidissement produit une lame (63) de gaz pulsé à écoulement laminaire à travers une fente (72) axiale de sortie orthogonale à sa direction (C) d'écoulement.

2. Installation (26) selon la revendication précédente, **caractérisée en ce que** le dispositif (62) de refroidissement comporte une chambre (66) de pression alimentée en gaz comprimé dont un côté forme une tuyère (70) convergente linéaire débouchant par la fente (72) de sortie de la lame (63) de gaz pulsé.

3. Installation (26) selon la revendication précédente, **caractérisé en ce que** la zone (40) de conditionnement thermique forme un couloir à travers lequel les préformes (14) défilent orthogonalement à leur axe (A) vertical par déplacement des organes (34) de maintien.

4. Installation (26) selon la revendication précédente, **caractérisé en ce que** la partie (42) de chauffage et la partie (44) de refroidissement sont séparées par deux rails (54) longitudinaux de séparation qui délimitent transversalement un passage longitudinal pour permettre le défilement des préformes (14) à cheval sur les deux parties (42, 44) de la zone (40) de conditionnement thermique.

5. Installation (26) selon la revendication précédente, **caractérisée en ce que** la fente (72) de sortie de la lame (63) de gaz pulsé est orientée parallèlement à la direction de déplacement des préformes (14).

6. Installation (26) selon la revendication précédente, **caractérisée en ce que** la fente (72) de sortie du dispositif (62) de refroidissement est agencée à proximité de la partie (44) de refroidissement, la direction (C) d'écoulement de la lame (63) de gaz pulsé étant braquée vers le col (20) des préformes (14).

7. Installation (26) selon la revendication précédente, **caractérisée en ce que** la fente (72) de sortie est agencée verticalement à la même hauteur que le col (20) des préformes (14), la direction (C) d'écoulement de la lame (63) de gaz pulsé étant perpendiculaire à l'axe (A) vertical de la préforme (14).

8. Installation (26) selon la revendication 4, **caractérisée en ce que** la fente (72) de sortie est agencée verticalement sous le col (20) de la préforme (14), la direction (C) d'écoulement de la lame (63) de gaz pulsé formant avec l'axe (A) vertical de la préforme (14) un angle (β) d'inclinaison, la direction (C) d'écoulement étant braquée, au-delà du col (20) des préformes (14), vers le passage délimité entre les deux rails (54).

9. Installation (26) selon l'une quelconque des revendications 6 à 8, **caractérisée en ce que** le dispositif (62) de refroidissement est monté mobile entre une première position dans laquelle la direction (C) d'écoulement est orientée transversalement, et une deuxième position dans laquelle la direction (C) d'écoulement est braquée vers le passage délimité entre les deux rails (54).

10. Installation (26) selon l'une quelconque des revendications 6 à 9, **caractérisée en ce que** le dispositif (62) de refroidissement est agencé sous l'un des rails (54).

11. Installation (26) selon la revendication précédente, **caractérisé en ce qu'**un interstice (78) est réservé entre le rail (54) et le dispositif (62) de refroidissement pour permettre l'aspiration d'air, par effet Venturi, entre le rail (54) et le dispositif (62) de refroidissement par la lame (63) de gaz pulsé.

12. Installation (26) selon la revendication 5, **caractérisée en ce que** la lame (63) de gaz pulsé est injectée directement dans la partie (42) de chauffage.

13. Installation (26) selon la revendication précédente, **caractérisée en ce que** la direction (C) d'écoulement de la lame (63) de gaz pulsé est dirigée parallèlement à l'axe (A) vertical de la préforme (14).

14. Installation (26) selon la revendication précédente, **caractérisée en ce que** la lame (63) de gaz pulsé est tangente le corps (16) de la préforme (14).

15. Installation (26) selon la revendication 13, **caractérisée en ce que** l'axe (C) d'écoulement de la lame (63) de gaz pulsé est agencée à une distance transversale déterminée de la surface de la préforme (16).

## Patentansprüche

1. Anlage (26) zum serienmäßigen thermischen Konditionieren von kalten Vorformlingen (14) aus thermoplastischem Material, die zur Verarbeitung zu endgültigen Behältern (12) durch Formen bestimmt sind, wobei jeder Vorformling (14) eine vertikale Hauptachse (A) aufweist, die durch einen Hals (20) verläuft, die Anlage (26) umfassend:
- mindestens ein Element (34) zum Halten eines Vorformlings (14) an dessen Hals (20) in einem Bereich (40) zum thermischen Konditionieren, wobei der Bereich (40) zum thermischen Konditionieren vertikal in einen ersten Teilbereich (42) zum Erhitzen, der dazu bestimmt ist, einen Körper (16) des Vorformlings (14) aufzunehmen, wobei der Teilbereich (42) zum Erhitzen mindestens einem Element (46) zum Erhitzen des Körpers (16) des Vorformlings (14) ausgesetzt ist, und einen zweiten Teilbereich (44) zum Kühlen, der dazu bestimmt ist, den Hals (20) des Vorformlings (14) aufzunehmen, aufgeteilt ist;
- mindestens eine Vorrichtung (62) zum Kühlen mindestens eines Teils der Oberfläche des Vorformlings (14) durch Erzeugung eines Gas-, insbesondere Luft-, Stroms, der den Bereich (40) zum thermischen Konditionieren durchläuft;
**dadurch gekennzeichnet, dass** die Vorrichtung (62) zum Kühlen einen Vorhang (63) aus Gas erzeugt, das mit einer laminaren Strömung durch einen axialen Auslassschlitz (72), der orthogonal zu seiner Strömungsrichtung (C) verläuft, geblasen wird.

2. Anlage (26) nach dem vorhergehenden Anspruch, **dadurch gekennzeichnet, dass** die Vorrichtung (62) zum Kühlen eine Druckkammer (66) umfasst, die mit Druckgas versorgt wird, deren eine Seite eine lineare konvergente Düse (70) bildet, die in dem Auslassschlitz (72) des Vorhangs (63) aus geblasenem Gas mündet.

3. Anlage (26) nach dem vorhergehenden Anspruch, **dadurch gekennzeichnet, dass** der Bereich (40) zum thermischen Konditionieren einen Gang bildet, durch welchen die Vorformlinge (14) orthogonal zu ihrer vertikalen Achse (A) durch Bewegen der Elemente (34) zum Halten hindurchlaufen.

4. Anlage (26) nach dem vorhergehenden Anspruch, **dadurch gekennzeichnet, dass** der Teilbereich (42) zum Erhitzen und der Teilbereich (44) zum Kühlen durch zwei längs verlaufende Trennschienen (54) getrennt sind, die einen längs verlaufenden Durchgang quer begrenzen, um das Hindurchlaufen der Vorformlinge (14) rittlings auf den zwei Teilbereichen (42, 44) des Bereichs (40) zum thermischen Konditionieren zu erlauben.

5. Anlage (26) nach dem vorhergehenden Anspruch, **dadurch gekennzeichnet, dass** der Auslassschlitz (72) des Vorhangs (63) aus geblasenem Gas parallel zu der Bewegungsrichtung der Vorformlinge (14) ausgerichtet ist.

6. Anlage (26) nach dem vorhergehenden Anspruch, **dadurch gekennzeichnet, dass** der Auslassschlitz (72) der Vorrichtung (62) zum Kühlen in der Nähe des Teilbereichs (44) zum Kühlen angeordnet ist, wobei die Strömungsrichtung (C) des Vorhangs (63) aus geblasenem Gas auf den Hals (20) der Vorformlinge (14) gerichtet ist.

7. Anlage (26) nach dem vorhergehenden Anspruch, **dadurch gekennzeichnet, dass** der Auslassschlitz (72) vertikal auf derselben Höhe wie der Hals (20) der Vorformlinge (14) angeordnet ist, wobei die Strömungsrichtung (C) des Vorhangs (63) aus geblasenem Gas senkrecht zu der vertikalen Achse (A) des Vorformlings (14) verläuft.

8. Anlage (26) nach Anspruch 4, **dadurch gekennzeichnet, dass** der Auslassschlitz (72) vertikal unter dem Hals (20) des Vorformlings (14) angeordnet ist, wobei die Strömungsrichtung (C) des Vorhangs (63) aus geblasenem Gas mit der vertikalen Achse (A) des Vorformlings (14) einen Neigungswinkel (β) bildet, wobei die Strömungsrichtung (C) über den Hals (20) der Vorformlinge (14) hinaus auf den Durchgang gerichtet ist, der zwischen den zwei Schienen (54) begrenzt ist.

9. Anlage (26) nach einem der Ansprüche 6 bis 8, **dadurch gekennzeichnet, dass** die Vorrichtung (62) zum Kühlen zwischen einer ersten Position, in der die Strömungsrichtung (C) quer ausgerichtet ist, und einer zweiten Position, in der die Strömungsrichtung (C) auf den Durchgang gerichtet ist, der zwischen den zwei Schienen (54) begrenzt ist, beweglich angebracht ist.

10. Anlage (26) nach einem der Ansprüche 6 bis 9, **dadurch gekennzeichnet, dass** die Vorrichtung (62) zum Kühlen unter einer der Schienen (54) angeordnet ist.

11. Anlage (26) nach dem vorhergehenden Anspruch, **dadurch gekennzeichnet, dass** ein Zwischenraum (78) zwischen der Schiene (54) und der Vorrichtung (62) zum Kühlen freigelassen ist, um die Ansaugung von Luft durch den Venturi-Effekt zwischen der Schiene (54) und der Vorrichtung (62) zum Kühlen durch den Vorhang (63) aus geblasenem Gas zu erlauben.

12. Anlage (26) nach Anspruch 5, **dadurch gekennzeichnet, dass** der Vorhang (63) aus geblasenem Gas direkt in den Teilbereich (42) zum Erhitzen eingespritzt wird.

13. Anlage (26) nach dem vorhergehenden Anspruch, **dadurch gekennzeichnet, dass** die Strömungsrichtung (C) des Vorhangs (63) aus geblasenem Gas parallel zur vertikalen Achse (A) des Vorformlings (14) gelenkt wird.

14. Anlage (26) nach dem vorhergehenden Anspruch, **dadurch gekennzeichnet, dass** der Vorhang (63) aus geblasenem Gas tangential dem Körper (16) des Vorformlings (14) verläuft.

15. Anlage (26) nach Anspruch 13, **dadurch gekennzeichnet, dass** die Strömungsachse (C) des Vorhangs (63) aus geblasenem Gas in einem bestimmten Querabstand zur Oberfläche des Vorformlings (16) angeordnet ist.

## Claims

1. Installation (26) for thermally conditioning a series of cold thermoplastic preforms (14) intended to be converted into final containers (12) by forming, each preform (14) having a vertical main axis (A) passing through a neck (20), the installation (26) comprising:
- at least one holding member (34) for holding a preform (14) by its neck (20) in a thermal conditioning zone (40), the thermal conditioning zone (40) being split vertically into a heating first part (42) which is intended to house a body (16) of the preform (14), the heating part (42) being exposed to at least one heating member (46) heating the body (16) of the preform (14) and into a cooling second part (44) which is intended to house the neck (20) of the preform (14);
- at least one cooling device (62) for cooling at least a portion of the surface of the preform (14) by producing a stream of gas, notably air, passing through the thermal conditioning zone (40);
**characterized in that** the cooling device (62) produces a blown curtain (63) of gas with laminar flow through an axial outlet slot (72) orthogonal to its direction (C) of flow.

2. Installation (26) according to the preceding claim, **characterized in that** the cooling device (62) comprises a pressure chamber (66) supplied with compressed gas and one side of which forms a linear convergent nozzle (70) opening through the blown-gas curtain (63) outlet slot (72).

3. Installation (26) according to the preceding claim, **characterized in that** the thermal conditioning zone (40) forms a lane along which the preforms (14) pass at right angles to their vertical axis (A) through movement of the holding members (34).

4. Installation (26) according to the preceding claim, **characterized in that** the heating part (42) and the cooling part (44) are separated by two longitudinal separating rails (54) which transversely delimit a longitudinal passage to allow the preforms (14) to pass such that they straddle the two parts (42, 44) of the thermal conditioning zone (40).

5. Installation (26) according to the preceding claim, **characterized in that** the blown-gas curtain (63) outlet slot (72) is oriented parallel to the direction of travel of the preforms (14).

6. Installation (26) according to the preceding claim, **characterized in that** the outlet slot (72) of the cooling device (62) is arranged near the cooling part (44), the direction (C) of flow of the blown-gas curtain (63) being angled towards the neck (20) of the preforms (14).

7. Installation (26) according to the preceding claim, **characterized in that** the outlet slot (72) is arranged vertically at the same height as the neck (20) of the preforms (14), the direction (C) of flow of the blown-gas curtain (63) being perpendicular to the vertical axis (A) of the preform (14).

8. Installation (26) according to Claim 4, **characterized in that** the outlet slot (72) is arranged vertically below the neck (20) of the preform (14), the direction (C) of flow of the blown-gas curtain (63) forming with the vertical axis (A) of the preform (14) an angle (β) of inclination, the direction (C) of flow being angled, beyond the neck (20) of the preforms (14), towards the passage delimited between the two rails (54).

9. Installation (26) according to any one of Claims 6 to 8, **characterized in that** the cooling device (62) is mounted with the ability to move between a first position in which the direction (C) of flow is oriented transversely, and a second position in which the direction (C) of flow is angled towards the passage delimited between the two rails (54).

10. Installation (26) according to any one of Claims 6 to 9, **characterized in that** the cooling device (62) is arranged below one of the rails (54).

11. Installation (26) according to the preceding claim, **characterized in that** a gap (78) is left between the rail (54) and the cooling device (62) so as to allow air to be drawn, by a venturi effect, between the rail (54) and the cooling device (62) by the blown-gas curtain (63).

12. Installation (26) according to Claim 5, **characterized in that** the blown-gas curtain (63) is injected directly into the heating part (42).

13. Installation (26) according to the preceding claim, **characterized in that** the direction (C) of flow of the blown-gas curtain (63) is directed parallel to the vertical axis (A) of the preform (14).

14. Installation (26) according to the preceding claim, **characterized in that** the blown-gas curtain (63) is tangential to the body (16) of the preform (14).

15. Installation (26) according to Claim 13, **characterized in that** the axis (C) of flow of the blown-gas curtain (63) is arranged a determined transverse distance away from the surface of the preform (16).
